# FASCICULE DE BREVET EUROPEEN

(11) **EP 3 505 779 B1**
(45) Date de publication et mention de la délivrance du brevet: **29.07.2020**
(21) Numéro de dépôt: 18213730.7
(22) Date de dépôt: 18.12.2018
(51) Int. Cl.: F16B 5/02, F16B 37/06, B61D 17/16, F16B 41/00

(54) **PLAQUE EN TÔLE MÉTALLIQUE, PORTANT UNE VIS SANS SOUDAGE**
METALLBLECHPLATTE, DIE EINE SCHRAUBE OHNE VERSCHWEISSUNG UMFASST
SHEET METAL PLATE, HAVING A NON-WELDED SCREW

(30) Priorité: 29.12.2017 FR 1763353
(43) Date de publication de la demande: 03.07.2019
(73) Titulaire: ALSTOM Transport Technologies, 93400 Saint-Ouen (FR)
(72) Inventeur: DUBREUCQ, Jérémy, 59880 SAINT SAULVE (FR); LEBER, Yohan, 59300 VALENCIENNES (FR); LE-LIEPVRE, Bertrand, 59111 HORDAIN (FR); SCARAMUZZINO, Jean-Pierre, 59870 WARLAING (FR)
(74) Mandataire: Lavoix

(56) Documents cités:
- EP-A1- 1 031 674
- BE-A- 555 879
- FR-A1- 2 220 845
- US-A- 2 100 129
- US-A- 5 338 138
- US-A1- 2008 156 415

## Description

La présente invention concerne une plaque en tôle métallique mince, portant au moins une vis destinée à recevoir un écrou pour la fixation d'un équipement.

Le document EP 1 031 674 A montre un profilé en tôle fixé par une vis.

Une plaque en tôle métallique mince forme par exemple une trappe d'inspection, équipant notamment un plafond, par exemple dans un véhicule ferroviaire. L'équipement est par exemple une poignée permettant de manipuler la trappe d'inspection.

Habituellement, la vis est reliée à la plaque par soudage, ce qui peut entraîner des défauts de surface nécessitant ensuite d'être masquée.

L'invention a notamment pour but de remédier à cet inconvénient, en proposant une plaque portant au moins une vis sans nécessiter de soudage.

A cet effet, l'invention a notamment pour objet une plaque en tôle métallique mince, portant au moins une vis destinée à la fixation d'un équipement, comportant une partie centrale et une partie de bord repliée sur la partie centrale, la vis comprenant une tête intercalée entre la partie de bord repliée et la partie centrale, et un corps traversant la partie de bord, caractérisée en ce que la partie de bord comprend à son extrémité latérale un rebord s'étendant perpendiculairement à cette partie de bord.

La vis est ainsi maintenue en place par la partie de bord repliée, sans nécessiter de soudage.

Une plaque selon l'invention peut comporter en outre l'une ou plusieurs des caractéristiques suivantes, prises seules ou selon toutes combinaisons techniquement envisageables :
- la plaque comprend un bloc d'isolant assemblé d'une part au rebord et d'autre part à la partie centrale ;
- le bloc d'isolant est assemblé par collage au rebord et à la partie centrale ;
- le bloc d'isolant est en mousse, notamment de polyurethane ou de polyisocyanurate ;
- la plaque présente une forme générale rectangulaire présentant quatre parties de bord pliables ;
- la plaque forme une trappe d'inspection ; et
- l'équipement est une poignée.

L'invention concerne également un procédé de fabrication d'une plaque telle que définie précédemment, caractérisé en ce qu'il comporte les étapes suivantes :
- découpage d'une tôle pour former une pré-forme,
- perçage d'au moins un orifice de passage de vis dans la partie de bord,
- passage de la vis dans l'orifice de passage correspondant,
- pliage de la partie de bord le long d'une ligne de pliage, la partie de bord étant rabattue et pressée sur la partie centrale.

L'invention sera mieux comprise à la lecture de la description qui va suivre, donnée uniquement à titre d'exemple et faite en se référant aux figures annexées, parmi lesquelles :
- La figure 1 est une vue partielle en coupe d'une plaque selon un exemple de mode de réalisation de l'invention ;
- Les figures 2 et 3 sont des vues partielles en perspective de la plaque de la figure 1, au cours d'étapes d'un procédé de fabrication de cette plaque.

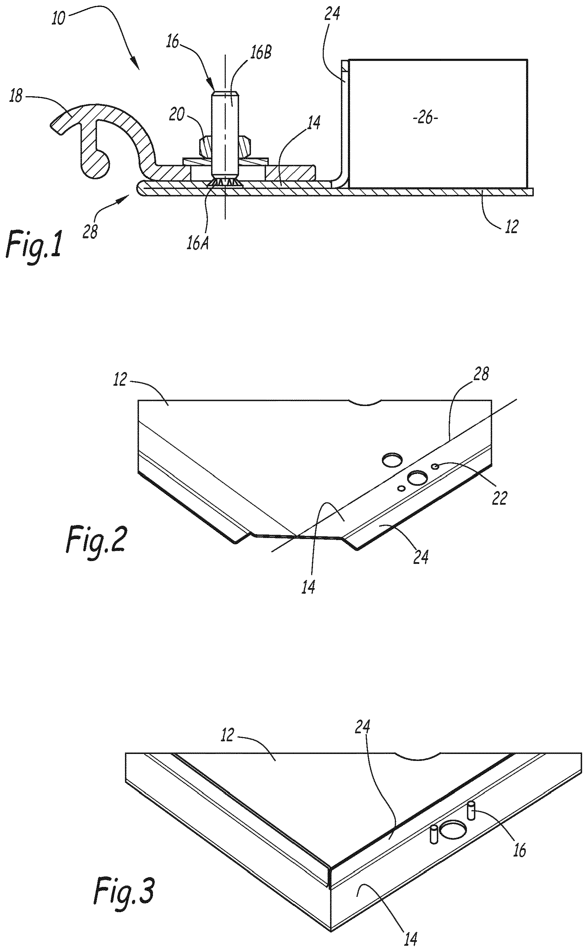

On a représenté partiellement sur la figure 1 une plaque en tôle métallique mince 10 selon un exemple de mode de réalisation de l'invention.

Dans la présente description, la plaque 10 est dite « mince » dès lors qu'elle est apte à être pliée, par n'importe quel procédé de pliage envisageable.

La plaque 10 est par exemple destinée à former une trappe d'inspection, équipant par exemple un plafond de véhicule ferroviaire.

La plaque 10 comporte une partie centrale 12, et au moins une partie de bord 14 longeant la partie centrale 12, et séparée de la partie centrale 12 par une ligne de pliage 28. En effet, la partie de bord 14 est repliée sur la partie centrale 12.

Par exemple, la plaque 10 présente une forme générale rectangulaire, et comporte alors quatre parties de bord 14, longeant chacune un côté du rectangle.

Dans ce qui suit, une seule partie de bord 14 est décrite, les autres parties de bord 14 étant similaires.

La plaque 10 porte au moins une vis 16, destinée à la fixation d'un équipement 18, par exemple d'une poignée permettant de manipuler cette plaque 10. L'équipement 18 est par exemple fixé par serrage au moyen d'un écrou 20 coopérant avec la vis 16.

Il est à noter qu'un même équipement 18 peut être fixé au moyen de plusieurs vis 16.

Chaque vis 16 comporte une tête 16A et un corps 16B.

Comme cela est représenté sur la figure 1, la tête 16A est intercalée entre la partie de bord 14 et la partie centrale 16. Le corps 16B quant à lui traverse la partie de bord 14. A cet effet, la partie de bord 14 présente un orifice de passage 22 pour chaque vis 16 (visible sur la figure 2).

La partie de bord 14 étant repliée et pressée contre la partie centrale 16, la tête 16A est ainsi maintenue entre cette partie de bord 14 et la partie centrale 16, et cela sans nécessiter de soudage.

Avantageusement, la partie de bord 14 comprend à son extrémité latérale un rebord 24 s'étendant perpendiculairement à cette partie de bord 14, parallèlement à la ligne de pliage 28. Ce rebord 24 forme notamment une partie de rigidification de la plaque 10.

De préférence, la plaque 10 comporte par ailleurs un bloc d'isolant 26, s'étendant sur une grande partie de la partie centrale 12.

Le bloc d'isolant 26 est assemblé d'une part au rebord 24 et d'autre part à la partie centrale 12, comme cela est représenté sur la figure 1.

Avantageusement, le bloc d'isolant 26 est ainsi assemblé au rebord 24 de chaque partie de bord 14.

De préférence, le bloc d'isolant 26 est assemblé par collage au rebord 24 et à la partie centrale 12.

Le bloc d'isolant 26 ainsi assemblé au rebord 24 et à la partie centrale 12 renforce le maintien de la partie de bord 14 contre la partie centrale 12.

Le bloc d'isolant 26 est avantageusement en mousse, par exemple de polyurethane ou de polyisocyanurate.

Un procédé de fabrication de la plaque 10 va maintenant être décrit, en référence aux figures 2 et 3.

Le procédé comporte tout d'abord une étape de découpage d'une tôle pour former une pré-forme. Cette étape de découpage permet de délimiter un contour de la plaque 10 avant pliage, ce contour étant conformé pour permettre ce pliage, notamment au niveau des coins de la plaque 10. Ainsi, le coin est découpé de sorte que les extrémités longitudinales de deux parties de bord 14 adjacentes se retrouvent appliquées l'une contre l'autre lorsque ces parties de bord 14 sont repliées sur la partie centrale 12 comme représenté sur la figure 2.

Le procédé comporte ensuite le perçage d'au moins un orifice 22 de passage de vis dans la partie de bord 14 destinée à accueillir l'équipement 18. Il est à noter que les parties de bord 14 ne portent pas nécessairement toutes un équipement 18. Par exemple, seul l'une des parties de bord 14 est destinée à recevoir un tel équipement 18. Ainsi, seule la ou les parties de bord destinées à recevoir un équipement 18 sont ainsi percées.

L'orifice de passage 22 est de préférence chanfreiné, de façon à présenter une forme complémentaire de la tête de vis 16A, qui peut ainsi s'emboîter dans cet orifice de passage 22.

Le procédé comporte ensuite le passage d'une vis 16 dans chaque orifice de passage 22 correspondant.

Le procédé comporte ensuite le pliage du rebord 24 perpendiculairement à la partie de bord 14 correspondante.

Le procédé comporte ensuite le pliage de la partie de bord 14 le long d'une ligne de pliage 28, la partie de bord 14 étant rabattue et pressée sur la partie centrale 12. La tête de vis 16A se retrouve ainsi enserrée entre la partie de bord 14 et la partie centrale 12.

Suite à ce pliage, les rebords 24 des parties de bord 14 forment ensemble un cadre.

Le procédé comporte ensuite l'assemblage du bloc d'isolant 26 avec les rebords 24 et avec la partie centrale 12, de préférence par collage.

Le procédé comporte enfin la fixation de l'équipement 18, notamment au moyen de l'écrou 20 coopérant avec la vis 16.

On notera que l'invention n'est pas limitée au mode de réalisation précédemment décrit, mais pourrait présenter diverses variantes complémentaires.

## Revendications

1. Plaque (10) en tôle métallique mince, portant au moins une vis (16) destinée à la fixation d'un équipement, comportant une partie centrale (12) et une partie de bord (14) repliée sur la partie centrale (12), la vis (16) comprenant une tête (16A) intercalée entre la partie de bord (14) repliée et la partie centrale (12), et un corps (16B) traversant la partie de bord (14), **caractérisée en ce que** la partie de bord (14) comprend à son extrémité latérale un rebord (24) s'étendant perpendiculairement à cette partie de bord (14).

2. Plaque (10) selon la revendication 1, comprenant un bloc d'isolant (26) assemblé d'une part au rebord (24) et d'autre part à la partie centrale (12).

3. Plaque (10) selon la revendication 2, dans lequel le bloc d'isolant (26) est assemblé par collage au rebord (24) et à la partie centrale (12).

4. Plaque (10) selon la revendication 2 ou 3, dans lequel le bloc d'isolant (26) est en mousse, notamment de polyurethane ou de polyisocyanurate.

5. Plaque (10) selon l'une quelconque des revendications précédentes, de forme générale rectangulaire présentant quatre parties de bord (14) pliables.

6. Plaque (10) selon l'une quelconque des revendications précédentes, formant une trappe d'inspection.

7. Plaque (10) selon l'une quelconque des revendications précédentes, dans lequel l'équipement (18) est une poignée.

8. Procédé de fabrication d'une plaque (10) selon l'une quelconque des revendications précédentes, **caractérisé en ce qu'**il comporte les étapes suivantes :
- découpage d'une tôle pour former une pré-forme,
- perçage d'au moins un orifice (22) de passage de vis (16) dans la partie de bord (14),
- passage de la vis (16) dans l'orifice de passage (22) correspondant,
- pliage de la partie de bord (14) le long d'une ligne de pliage (28), la partie de bord (14) étant rabattue et pressée sur la partie centrale (12).

## Patentansprüche

1. Platte (10) aus dünnem Metallblech, die mindestens eine für eine Befestigung einer technischen Ausrüstung vorgesehenen Schraube (16) trägt, wobei die Platte einen Mittelteil (12) und einen Randteil (14), der auf den Mittelteil (12) umgebogen ist, aufweist, wobei die Schraube (16) einen Kopf (16A), der zwischen dem umgebogenen Randteil (14) und dem Mittelteil (12) eingefügt ist, und einen den Randteil durchgreifenden Körper (16B) aufweist, **dadurch gekennzeichnet, dass** der Randteil (14) an seinem seitlichen Ende einen Rand (24) umfasst, der sich senkrecht zu diesem Randteil (14) erstreckt.

2. Platte (10) nach Anspruch 1, einen Isolierblock (26) umfassend, der einerseits am Rand (24) und andererseits am Mittelteil (12) angesetzt ist.

3. Platte (10) nach Anspruch 2, bei der der Isolierblock (26) durch Klebung am Rand (24) und am Mittelteil (12) angefügt ist.

4. Platte (10) nach Anspruch 2 oder 3, bei der der Isolierblock (26) aus Schaumstoff, insbesondere Polyurethan oder Polyisocyanurat besteht.

5. Platte (10) nach einem beliebigen der vorhergehenden Ansprüche in einer allgemein rechteckigen Form, die vier umbiegbare Randteile (14) aufweist.

6. Platte (10) nach einem beliebigen der vorhergehenden Ansprüche, eine Revisionsklappe bildend.

7. Platte (10) nach einem beliebigen der vorhergehenden Ansprüche, bei der die technische Ausrüstung (18) ein Griff ist.

8. Verfahren zur Herstellung einer Platte (10) nach einem beliebigen der vorhergehenden Ansprüche, **dadurch gekennzeichnet, dass** es die folgenden Schritte aufweist:
- Schneiden eines Blech, um eine Vorform zu bilden,
- Bohren mindestens eines Lochs (22) für den Schraubendurchgriff (16) in dem Randteil (14),
- Einsetzen der Schraube (16) in das entsprechende Durchgangsloch (22),
- Umbiegen des Randteils (14) entlang einer Biegelinie (28), wobei der Randteil (14) auf den Mittelteil (12) umgeschlagen und gepresst wird.

## Claims

1. A plate (10) made from thin sheet metal, bearing at least one screw (16) intended to fasten an equipment item, including a central part (12) and an edge part (14) folded on the central part (12), the screw (16) comprising a head (16A) inserted between the folded edge part (14) and the central part (12), and a body (16B) passing through the edge part (14), **characterized in that** the edge part (14) comprises, at its lateral end, a rim (24) extending perpendicularly to this edge part (14).

2. The plate (10) according to claim 1, comprising an insulating block (26) assembled on the one hand to the rim (24) and on the other hand to the central part (12).

3. The plate (10) according to claim 2, wherein the insulating block (26) is assembled by gluing to the rim (24) and to the central part (12).

4. The plate (10) according to claim 2 or 3, wherein the insulating block (26) is made from foam, in particular from polyurethane or polyisocyanurate.

5. The plate (10) according to any one of the preceding claims, with a rectangular general shape having four foldable edge parts (14).

6. The plate (10) according to any one of the preceding claims, forming an inspection hatch.

7. The plate (10) according to any one of the preceding claims, wherein the equipment item (18) is a handle.

8. A method for manufacturing a plate (10) according to any one of the preceding claims, **characterized in that** it includes the following steps:
- cutting a metal sheet to form a preform,
- drilling at least one orifice (22) for the passage of screws (16) in the edge part (14),
- passing the screw (16) in the corresponding passage orifice (22),
- folding the edge part (14) along a folding line (28), the edge part (14) being folded over and pressed on the central part (12).
